# EUROPEAN PATENT APPLICATION

(11) **EP 2 230 418 A1**
(43) Date of publication of application: **22.09.2010**
(21) Application number: 10156589.3
(22) Date of filing: 16.03.2010
(51) Int. Cl.: F16F 9/49

(54) **Shock absorber**

(30) Priority: 16.03.2009 NL 1036712
(71) Applicant: VRS - Ven Racing Suspension, 5703 KB Helmond (NL)
(72) Inventor: van der Ven, Antonius Augustus Theodorus, 5703 KB Helmond (NL)
(74) Representative: Jilderda, Anne Ayolt

(57) **Abstract**

A shock absorber 1 comprises a cylinder chamber 2 inside a cylinder housing 3 intended and adapted to receive a hydraulic liquid as damping fluid. The shock absorber 1 is provided with attaching means for attaching to two elements, a relative movement of which must be controlled. A piston 4 is displaced through the cylinder chamber 2 via a piston rod 5 coupled thereto, thus displacing the hydraulic liquid. Between the piston 4 and a free outer end 9 of the piston rod 5 an air chamber 7 bounded by a jacket 6 is provided between a first closed end wall 8 and a second closed end wall 9. The end wall 8 displaces axially inside the jacket during a movement of the piston, wherein in a first position of the piston it closes the air chamber at least substantially airtightly. Striking-through of the shock absorber is hereby prevented.

## Description

The present invention relates to a shock absorber, comprising a cylinder chamber inside a cylinder housing intended and adapted to receive a damping fluid, wherein a piston is axially displaceable between a first position and a second position in the cylinder chamber, thus displacing at least a part of the damping fluid, and wherein a piston rod extending from the cylinder housing in axially movable manner is connected to the piston.

Shock absorbers are used in a wide variety of applications. A shock absorber of the type stated in the preamble usually finds application on motor vehicles in or close to a wheel suspension for the purpose of damping the action of a suspension present in the vehicle. The known shock absorber comprises for this purpose a cylinder housing filled with a hydraulic liquid, whereby a piston is axially displaceable and displaces at least a part of the liquid. Connected to the piston is a piston rod which extends axially from the cylinder housing and which can be attached with an outer end to a first of two elements for damping relative to each other, while an opposite outer end of the cylinder can be attached to a second of the two elements. The damping takes place by the piston being displaced by the hydraulic liquid during a relative movement of the two elements, for instance a chassis and a wheel axle of the vehicle. Because the hydraulic liquid offers resistance here to the piston, the piston is displaced relatively smoothly and uniformly. An uneven jolting movement of the two elements is hereby prevented. The ride characteristics of a vehicle in which the known shock absorber is applied are thus improved.

Although the known shock absorber can improve the ride characteristics of a vehicle, it does however also have a drawback. In the case of an excessive vibration or shock, which may or may not be intentional, for instance when driving over a very uneven surface, the known shock absorber is unable to absorb the shock completely. The shock absorber can strike through in such cases. There is then a maximum movement of the piston through the cylinder chamber in a relatively short time, wherein either the piston or a protruding part of the piston rod moves abruptly against an outer end of the cylinder housing. No further damping then takes place. The loss of the damping action of the shock absorber in the case of excessive vibrations or shocks has an adverse effect on the ride characteristics of the vehicle, and can moreover cause damage to the vehicle or even injury to a driver thereof.

The present invention therefore has for its object, among others, to provide a shock absorber which obviates said drawback.

In order to achieve the stated object a shock absorber of the type stated in the preamble has the feature according to the invention that between the piston and a free outer end of the piston rod an air chamber bounded by a jacket is provided between a first closed end wall and a second closed end wall, that at least one of the first and second end wall displaces axially inside the jacket during a movement of the piston between the two positions, wherein in the first position of the piston the at least one end wall closes the air chamber at least substantially airtightly, and that in the second position the air chamber is in open communication with the atmosphere via at least an opening. Because the at least one end wall displaces inside the jacket when the shock absorber is compressed as a result of a shock, wherein the air chamber between the cylinder and the free outer end of the piston rod is closed airtightly, a gas or air present in the air chamber will be compressed. The more the gas is compressed by a further displacement of the end wall, the more resistance the gas will provide to a further displacement of the end wall. Since the gas cannot escape here from the airtightly closed air chamber, a counter-pressure built up by the gas will ultimately prevent the end wall moving against the cylinder. Striking-through of the shock absorber, even in the case of a very great compression of the cylinder as a result of an excessive shock, will hereby be prevented. The shock absorber is thus particularly suitable for application in motor vehicles where striking-through of conventional shock absorbers occurs, such as vehicles frequently used on rough or uneven terrain, for instance motorcycles, and in particular off-road motorcycles.

Because the air chamber is moreover open on at least one side in the second position, a gas, for instance air, present in the air chamber is replaced with outside air after each operation of the shock absorber. This prevents the gas in the air chamber being heated due to the compression. A temperature of the gas in the air chamber then remains at least substantially constant, so that a buildup of the air pressure in the closed air chamber will be the same during each operation of the shock absorber. A bias of the shock absorber hereby remains at least substantially unchanged, even in the case of intensive and/or relatively prolonged use of the shock absorber.

A preferred embodiment of the shock absorber according to the present invention has the feature that the free outer end of the piston rod is connected to an end wall of the jacket closing the air chamber, and that in the first position the jacket closes airtightly onto a closed end wall of the cylinder housing and in the second position leaves clear at least one opening to the atmosphere. Upon a relative movement of the two elements between which the shock absorber is attached the free outer end of the piston rod will thus move with the jacket over the closed end wall of the cylinder housing so that the air chamber is closed airtightly. In an alternative embodiment the shock absorber according to the present invention is **characterized in that** the jacket is connected airtightly to a closed wall of the cylinder housing, that the free outer end of the piston rod passes in axially movable manner through the jacket and that, at least close to the free outer end of the piston rod, a closed wall is connected thereto which in the first position closes airtightly onto an inner wall of the jacket and in the second position leaves clear at least an opening between the air chamber and the atmosphere. In this embodiment a closed wall on the free outer end of the piston rod moves into the jacket, wherein the air chamber is closed airtightly.

In a further preferred embodiment the shock absorber according to the present invention is **characterized in that** the jacket widens on a side and extends therewith along a wall which is axially displaceable inside the jacket so as to leave an opening between an inner wall of the jacket and the wall in the second position. Widening of the jacket provides in simple manner an opening along which a gas present in the air chamber can be exchanged with outside air. When the shock absorber is compressed the wall can moreover be carried easily inside a narrower part of the jacket for an airtight closure of the air chamber, since the wall tracks along the widening of the jacket extending therealong.

A particular embodiment of the shock absorber according to the present invention has the feature that the jacket comprises at least one opening at which the air chamber is open in the second position, that the first closed wall is provided on the piston side of the jacket and the second closed wall is provided on the piston rod on the side of the free outer end of the piston rod and moves axially inside the jacket during a movement of the piston between the two positions, and that in the first position the second wall closes at least a part of the air chamber lying between the first wall and second wall airtightly from the at least one opening.

In a further preferred embodiment the shock absorber according to the present invention is **characterized in that** a protective sleeve is arranged round at least the opening of the air chamber at least between the cylinder housing and the free outer end of the piston rod. The protective sleeve forms a barrier which prevents dirt particles which can adversely affect the shock absorber from entering the air chamber and infiltrating between the components. In a particular embodiment hereof, the shock absorber according to the present invention is **characterized in that** the protective sleeve comprises a flexible air filter. The air filter prevents the penetration of dirt particles while allowing an exchange of outside air with the gas present in the air chamber.

The invention will now be further elucidated on the basis of a number of exemplary embodiments and an associated drawing. In the drawing:
- Figures 1A-B: show a front view of a longitudinal section of a first exemplary embodiment of a shock absorber according to the invention.
- Figure 2: shows a front view of a longitudinal section of a second exemplary embodiment of a shock absorber according to the invention.

The figures are otherwise purely schematic and not drawn to scale. For the sake of clarity some dimensions in particular may be exaggerated to greater or lesser extent.

Corresponding parts are designated as far as possible in the figures with the same reference numeral.

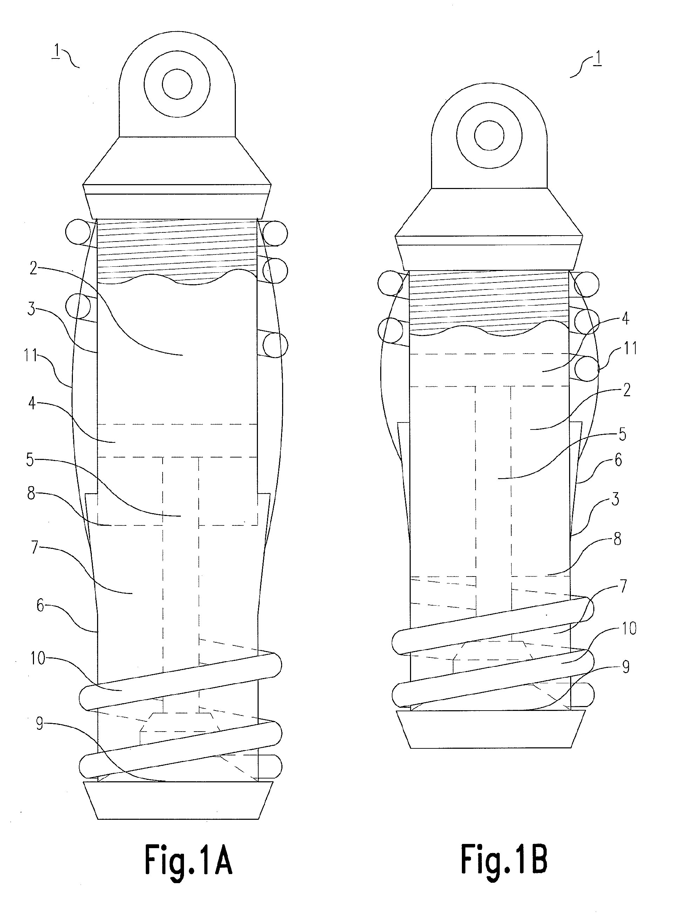

As shown in figure 1 in a first exemplary embodiment of a shock absorber according to the invention, shock absorber 1 comprises a cylinder chamber 2 inside a cylinder housing 3 which is intended and adapted to receive a hydraulic liquid as damping fluid. Shock absorber 1 is provided on either side with attaching means for attaching to two elements, a relative movement of which must be controlled. The shock absorber can thus be attached for instance between a wheel axle and a chassis of an off-road motorcycle. During a relative movement of the two elements a piston 4, under pressure from a piston rod 5 coupled thereto and extending in axially movable manner from cylinder housing 3, is displaced through cylinder chamber 2, thus displacing the hydraulic liquid. Piston 4 herein encounters resistance from the hydraulic liquid so that a displacement of piston 4 takes place relatively uniformly, i.e. not jerkily. Shock absorber 1 thus provides for a damping of a relative movement of the two elements. A spring 10 is arranged round shock absorber 1 between a free outer end 9 of piston rod 5 and an outer end of cylinder housing 3 in order to further enhance the ride characteristics of a vehicle in which the shock absorber is applied. When the shock absorber is compressed (see figure 1B), spring 10 will be compressed and the spring tension will increase. Spring 10 will then spring back to a starting position (see figure 1A), wherein shock absorber 1 is also returned to a starting position. In order to prevent shock absorber 1 striking through, wherein free outer end 9 of piston rod 5 moves against outer end 8 of cylinder housing 3, between piston 4 and free outer end 9 of piston rod 5 an air chamber 7 bounded by a jacket 6 is provided between a first closed end wall 8 and a second closed end wall 9. In this exemplary embodiment jacket 6 is fixed to piston rod 5 with a wall 9 closing the air chamber. During a movement of piston 4 between the two positions end wall 8 is displaced axially inside jacket 6. In the first position (see figure 1B) of piston 4 end wall 8 herein closes air chamber 7 at least substantially airtightly, and in the second position (see figure 1A) air chamber 7 is in open communication with the atmosphere via at least an opening. Because end wall 8 displaces inside the jacket during a movement of piston 4, for instance as a result of a shock, wherein air chamber 7 is closed airtightly between the cylinder and free outer end 9 of the piston rod and decreases in volume, a gas or air present in air chamber 7 will be compressed. The more the gas is compressed by a further displacement of end wall 8 inside jacket 6, the more resistance the gas will provide to a further displacement of the end wall. Because the gas cannot escape from the airtightly closed air chamber, a counter-pressure of the gas ultimately prevents end wall 8 of the cylinder moving against the free outer end of the piston rod. Striking-through of the shock absorber will hereby be prevented even in the case of a very great compression of the cylinder resulting from an excessive shock.

Because jacket 6 widens on a side and thereby extends along the end wall 8 which is axially displaceable inside jacket 6, in the second position (see figure 1A) an opening is left between an inner war of jacket 6 and end wall 8. Hereby provided in simple manner is an opening along which a gas, for instance air, present in air chamber 7 can be exchanged with outside air. Conversely, in the first position (see figure 1B) the air chamber is closed airtightly in simple manner by end wall 8 in that this latter is displaced into a narrower part of the jacket when the shock absorber is compressed. Wall 8 herein tracks inside the widening of jacket 6 extending therealong so that an outer end of jacket 6 is prevented from moving in uncontrolled manner against end wall 8. For an additionally reliable airtight closure of the air chamber the end wall 8 can be provided with sealing means, such as for instance a rubber O-ring, against which jacket 6 lies airtightly in the first position. Because air chamber 7 is open on at least one side in the second position, a gas present in the air chamber is exchanged with outside air after each operation of shock absorber 1. This prevents the gas in air chamber 7 being heated by each compression. A temperature of the gas in the air chamber thus remains at least substantially constant, whereby a bias of the shock absorber also remains at least substantially constant.

In order to prevent dirt particles such as sand being able to enter air chamber 7 or infiltrate between different components of shock absorber 1 during use of shock absorber 1, shock absorber 1 is provided between jacket 6 and an outer end of cylinder housing 3 with a flexible sleeve 11 so that the opening is in any case covered in the second position. Sleeve 11 can for instance comprise a fabric sock arranged over the shock absorber to prevent the penetration of dirt particles. The material for the sock can be any suitable material which is to some extent flexible and prevents penetration by dirt particles. A material is preferably chosen which has a certain strength so that it will have a long lifespan. More highly recommended is a material which moreover prevents penetration of moisture into the air chamber, so that no corrosion occurs in the components of the shock absorber, which are manufactured mainly from metal. A preferred material for sleeve 11 is for instance neoprene. Sleeve 11 must be to some extent flexible so that it can co-displace during a relative movement of the two elements between which the shock absorber is applied. During for instance compression of the shock absorber, sleeve 11 itself must therefore also be to some extent compressible. Flexible sleeve 11 is preferably a breathing air filter so that it does not form a barrier to a gas, for instance air, from air chamber 7 which must be exchanged with outside air via the opening.

Although this embodiment is described with reference to an end wall 8 of cylinder housing 3 which is displaceable inside jacket 6, wherein jacket 6 is fixed via end wall 9 to piston rod 5, it is possible instead to also opt for instance for an exemplary embodiment wherein jacket 6 is fixed via end wall 8 to cylinder housing 3 and wherein a free outer end 9 of the piston rod is axially movable inside jacket 6 for airtight closure of air chamber 7.

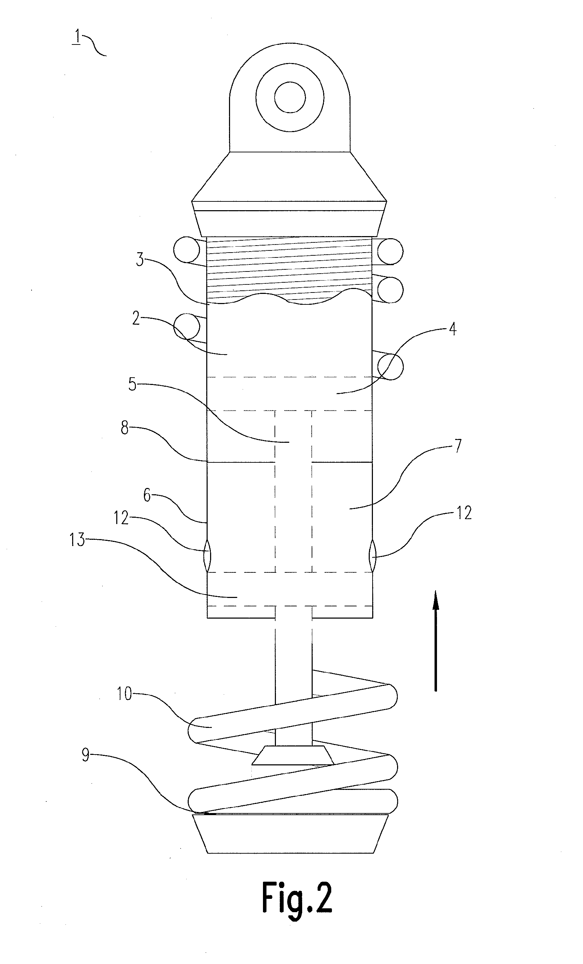

A second embodiment of a shock absorber according to the invention is almost the same as the first embodiment and is shown in figure 2. In this exemplary embodiment however, shock absorber 1 comprises a jacket 6 which is fixed to an end wall 8 of cylinder housing 3. Jacket 6 comprises at least one opening 12 at which an air chamber 7 is open in a second position for the purpose of exchanging a gas present in air chamber 7 with outside air. Air chamber 7 is closed airtightly on one side by the closed end wall 8 on the piston side of jacket 6. A second closed wall 13 is provided on the piston rod on the side of the free outer end 9 of the piston rod. This closed wall 13 displaces axially inside the jacket during a movement of piston 4 between a first position and the second position, wherein in the first position wall 13 closes at least a part of air chamber 7 between first wall 8 and second wall 13 airtightly from the at least one opening 12. Just as in the above described first exemplary embodiment, in this second exemplary embodiment of a shock absorber according to the invention an air chamber 7 is thus situated between relatively moving outer ends of the shock absorber, wherein a gas or air present in air chamber 7 is compressed during a movement of piston 4. Striking-through of the shock absorber is in this way also prevented with this exemplary embodiment.

Although the invention has been further elucidated with reference to only several exemplary embodiments, it will be apparent that the invention is by no means limited thereto. On the contrary, many variations and embodiments are still possible for a person with ordinary skill in the art within the scope of the invention.

## Claims

1. Shock absorber, comprising a cylinder chamber inside a cylinder housing intended and adapted to receive a damping fluid, wherein a piston is axially displaceable between a first position and a second position in the cylinder chamber, thus displacing at least a part of the damping fluid, and wherein a piston rod extending from the cylinder housing in axially movable manner is connected to the piston, **characterized in that** between the piston and a free outer end of the piston rod an air chamber bounded by a jacket is provided between a first closed wall and a second closed wall, that at least one of the first and second wall displaces axially inside the jacket during a movement of the piston between the two positions, wherein in the first position of the piston the at least one wall closes the air chamber at least substantially airtightly, and that in the second position the air chamber is in open communication with the atmosphere via at least an opening.

2. Shock absorber as claimed in claim 1, **characterized in that** the free outer end of the piston rod is connected to a wall of the jacket closing the air chamber, and that in the first position the jacket closes airtightly onto a closed wall of the cylinder housing and in the second position leaves clear at least an opening to the atmosphere.

3. Shock absorber as claimed in claim 1, **characterized in that** the jacket is connected airtightly to a closed wall of the cylinder housing, that the free outer end of the piston rod passes in axially movable manner through the jacket and that, at least close to the free outer end of the piston rod, a closed wall is connected thereto which in the first position closes airtightly onto an inner wall of the jacket and in the second position leaves clear at least an opening between the air chamber and the atmosphere.

4. Shock absorber as claimed in claim 2 or 3, **characterized in that** the jacket widens on a side and extends therewith along a wall which is axially displaceable inside the jacket so as to leave an opening between an inner wall of the jacket and the wall in the second position.

5. Shock absorber as claimed in claim 1, **characterized in that** the jacket comprises at least one opening at which the air chamber is open in the second position, that the first closed wall is provided on the piston side of the jacket and the second closed wall is provided on the piston rod on the side of the free outer end of the piston rod and moves axially inside the jacket during a movement of the piston between the two positions, and that in the first position the second wall closes at least a part of the air chamber lying between the first wall and second wall airtightly from the at least one opening.

6. Shock absorber as claimed in one or more of the foregoing claims, **characterized in that** a protective sleeve is arranged round at least the opening of the air chamber at least between the cylinder housing and the free outer end of the piston rod.

7. Shock absorber as claimed in claim 6, **characterized in that** the protective sleeve comprises a flexible air filter.
